# EUROPÄISCHE PATENTSCHRIFT

(11) **EP 0 924 146 B1**
(45) Veröffentlichungstag und Bekanntmachung des Hinweises auf die Patenterteilung: **24.07.2002**
(21) Anmeldenummer: 98123780.3
(22) Anmeldetag: 15.12.1998
(51) Int. Cl.: B65G 7/04

(54) **Vorrichtung zum Transport schwerer Lasten über eine unebene Fläche**
Device for conveying heavy loads upon uneven surfaces
Dispositif pour transporter des objets lourds sur des surfaces non planes

(30) Priorität: 19.12.1997 DE 19756618
(43) Veröffentlichungstag der Anmeldung: 23.06.1999
(73) Patentinhaber: Vieregge, Gerhard, 90584 Allersberg (DE)
(72) Erfinder: Vieregge, Gerhard, 90584 Allersberg (DE)
(74) Vertreter: Matschkur, Lindner Blaumeier Patent- und Rechtsanwälte

(56) Entgegenhaltungen:
- CH-A- 459 884
- DE-U- 8 618 673
- FR-A- 2 160 364
- FR-A- 2 600 961
- GB-A- 2 116 932

## Beschreibung

Die Erfindung betrifft eine Vorrichtung zum Transport schwerer Lasten über eine unebene Fläche, insbesondere von zu Paketen gepackten Dämmstoffplatten über ein Trapezblechdach, mit mindestens zwei voneinander beabstandeten Rollmitteln, von denen jedes mehrere derart hintereinander angeordnete Rollelemente aufweist, daß ein vergrößerter Bodenauflagebereich gebildet ist, so daß das Gewicht der Last zur Erzielung einer geringen Belastung pro Flächeneinheit auf einen entsprechend großen Flächenbereich verteilt wird.

Derartige Dämmstoffplatten werden auf Flachdächern größerer Hallen oder dergleichen verlegt. Da solche Hallen in der Regel sehr groß sind, besteht das Problem, die Dämmstoffplatten zur Verlegung auf dem Dach zu verteilen. Dies geschieht in der Regel derart, daß mittels eines Kranes die ca. 500 kg schweren Plattenpakete auf das Dach gehoben werden, wobei der Kran diese nur im Dachrandbereich positionieren kann. Ein weiteres Einschwenken ist hier in der Regel nicht möglich. Um nun die einzelnen Platten an die unterschiedlichen Dachstellen zu bringen, müssen diese entweder geöffnet und einzeln transportiert werden, was naturgemäß äußerst umständlich und zeitaufwendig ist. Im übrigen besteht die Gefahr, daß infolge des geöffneten Paketes die Dämmstoffplatten Feuchtigkeit aufnehmen können, was zu vermeiden ist. Um die gesamten Pakete transportieren zu können, werden in der Praxis Bretter über das unebene Dach, das beispielsweise von dem Trapezblech gebildet ist und entsprechende Erhebungen und Vertiefungen aufweist, gelegt, so daß auf diesen Brettern Hubwägen verfahren können. Auch dies ist äußerst aufwendig, ferner besteht die Gefahr, daß die Hubwägen von den Brettern abrutschen und auf das Blechdach schlagen. Daneben ist aus der Zeitschrift "DDH -Das Dachdeckerhandwerk 20/1995, Ausgabe vom 20. Oktober 1995, Seite 37", ein trapezblechgängiger Transportwagen bekannt, der einen Aufnahmerahmen für die Plattenpakete aufweist und bodenseitig mehrere Räder besitzt und so über das Trapezblech gerollt werden kann.

Wenngleich dieser Transportwagen bereits eine Verbesserung darstellt, besteht aber immer noch das Problem, daß im Hinblick auf die große Last der Pakete auch diese Lösung zu relativ hohen lokalen Belastungen des Blechdaches führen. Dies schließt einen unmittelbaren Transport über das Blechdach in der jeweiligen Feldmitte, also den Bereichen zwischen den die Trapezbleche tragenden Trägern, aus, da dort das Blechdach sehr biegsam ist und auch mit dem bekannten Transportwagen eine zu hohe lokale Belastung gegeben ist. Dies kann zu einem Verbiegen oder Eindrücken des Bleches führen, im Extremfall sogar zum Aufbrechen des Bleches.

Es sind bereits unterschiedliche Vorrichtungen zum Transport schwerer Lasten vorgeschlagen worden. Eine Rollvorrichtung für schwere Güter, beispielsweise Maschinen, ist aus der CH 459 884 bekannt. Dort werden zwei separate Rolleneinheiten verwendet, die vorne und hinten an der Last angreifen. Die Zuakraft wird über die Deichsel zur vorderen Rolleneinheit und über die zu transportierende Maschine auf die hinteren Rolleneinheiten übertragen. Mit dieser Vorrichtung lassen sich nur sehr stabile Güter bewegen.

Ein Transportwagen für schwere Lasten ist aus der FR 2 600 961 bekannt. Dieser Transportwagen ist als Schienenwagen mit Schienenrädern konzipiert. Sein Einsatzbereich beschränkt sich naturgemäß auf Orte, an denen entsprechende Schienen vorhanden sind. Es ist nicht möglich, jeden beliebigen Punkt anzufahren. Die in der FR 2 160 364 beschriebene Transportvorrichtung umfasst zwei separate Rolleneinheiten und eignet sich daher nur für stabile Güter, nicht jedoch für Dämmstoffplatten. Aus der GB 2 116 932 ist ein Rollwagen für Haushaltsgeräte bekannt. Die dort verwendeten Rollen sind jedoch relativ schmal, so daß es nicht möglich ist, eine belastungsempfindliche Fläche damit zu befahren.

Aus dem Gebrauchsmuster DE 86 18 673 U1 ist eine Vorrichtung zum Transport von Paletten bekannt, die ähnliche wie eine Sackkarre ausgebildet ist. Ein Bügel wird mit seinen Hebestützen unter eine Palette geschoben, die durch Drehen des Bügels einseitig angehoben werden kann. Anschließend kann bei angehobener Palette der auf Rollen laufende Rahmen unter die Palette geschoben werden, die anschließend auf dem Rahmen liegt und verfahren werden kann. Der Bügel dient dabei als Hilfsmittel zum Aufsetzen der Last auf den Transportwagen. Dieses Prinzip kann jedoch nur bei relativ kleinen Lasten verwendet werden, da beim Anheben der Palette ein großer Teil der Gewichtskraft über die relativ kleinen und schmalen Rollen an den Untergrund übertragen wird.

Der Erfindung liegt damit das Problem zugrunde, eine Vorrichtung anzugeben, die einen sicheren Transport schwerer Lasten, wie beispielsweise der genannten Dämmstoffplatten, über eine unebene Fläche, wie beispielsweise ein Trapezblech, ermöglicht, ohne daß von den Unebenheiten hervorgerufene Transportschwierigkeiten gegeben sind, wie auch eine punktuelle Belastungsverringerung erreicht werden soll, so daß auch über Flächen, die nur eine geringe punktuelle Lastbeanspruchung zulassen, ein Transport möglich ist.

Zur Lösung dieses Problems ist erfindungsgemäß eine Vorrichtung der eingangs genannten Art vorgesehen mit einem Hubmittel zum Anheben und Aufnehmen der Last.

Mittels der erfindungsgemäß vorgesehenen Rollmittel, die eine Vielzahl hintereinander angeordneter Elemente aufweist, wird mit besonderem Vorteil ein vergrößerter Auflagebereich geschaffen, das heißt, die Last wird auf eine relativ große Bodenfläche verteilt. Dies führt dazu, daß zum einen problemlos infolge der Vielzahl der angeordneten Rollenelemente über die unebene Fläche gefahren werden kann, da beispielsweise im Falle des Trapezblechdaches stets mehrere Rollelemente auf den Blecherhöhungen aufliegen und ein Einfallen in die jeweiligen Vertiefungen nicht möglich ist. Darüber hinaus ist es auch möglich, infolge der stark verringerten Punktlast über die Dachflächen mittig zu fahren, da eine Überbelastung infolge der optimierten Lastverteilung vorteilhaft vermieden wird. Die Rollelemente können erfindungsgemäß als längliche Rollen oder Walzen ausgebildet sein, alternativ kann jedes Rollelement auch mehrere hintereinander angeordnete Rollen, Walzen oder Räder aufweisen. Die Ausgestaltung ist hier beliebig, solange gewährleistet ist, daß mit der jeweils gewählten Rollelementenart ein hinreichend großer Auflagebereich realisiert werden kann. Aus Stabilitätsgründen hat es sich als vorteilhaft erwiesen, wenn das Rollmittel einen Trägerrahmen aufweist, an dem die Rollelemente gehaltert sind, wobei der Trägerrahmen erfindungsgemäß als an der Unterseite offenes Gehäuse ausgebildet sein kann. Dies ist besonders vorteilhaft im Hinblick einerseits auf die großen Lasten, die transportiert werden sollen, da sich mittels des Trägerrahmens beziehungsweise der Gehäuseausbildung eine hinreichende Steifigkeit erzielen läßt. Insbesondere die Gehäuseausbildung, die die Rollelemente abdeckt, ist hinsichtlich einer Beschädigung und aus Unfallverhütungsgründen vorteilhaft. Die Rollelemente selbst sind zweckmäßigerweise aus Kunststoff, insbesondere aus hartem Kunststoff gebildet, da dieses Material ein hinreichendes Verschieben beziehungsweise seitliches Ziehen ermöglicht, so daß - gesehen über die beachtlich langen Transportwege - mit der erfindungsgemäßen Vorrichtung mühelos auch Kurvenfahrten möglich sind, ohne hierfür unbedingt eine eigene Lenkbarkeit vorzusehen. Die Walzen, Rollen oder Räder sollten zweckmäßigerweise einen Durchmesser von 5 bis 11 cm, insbesondere von 9 cm aufweisen, alternativ oder zusätzlich können die Walzen oder Rollen eine Länge von 20 cm bis 50 cm, insbesondere von 33 cm aufweisen. Die angegebenen Bereichsgrenzen können im Anwendungsfall auch über- beziehungsweise unterschritten werden, sofern die tatsächlichen Gegebenheiten dies erfordern. Jedes Rollmittel sollte 6 bis 16 Rollelemente, insbesondere 10 Rollelemente aufweisen, wobei auch hier selbstverständlich wesentlich mehr Rollelemente vorgesehen sein können, um den Bodenauflagebereich vergrößern zu können.

Zwei Rollmittel können mittels wenigstens eines trägerartigen Verbindungselementes beabstandet zueinander verbunden sein. Dieses trägerartige Verbindungselement ist dahingehend von Vorteil, daß es relativ schmal gehalten werden kann bei gleichzeitiger hinreichender Steifigkeit, so daß das Eigengewicht der Vorrichtung gering gehalten werden kann. Darüber hinaus ermöglicht das Verbindungselement die hinreichende Beabstandung der Rollmittel, so daß die Auflagebereiche relativ weit auseinanderliegen. Die Rollmittel können hierbei derart weit voneinander beabstandet sein, daß sie zumindest teilweise seitlich neben der Last liegen, wobei die Dämmstoffplatten in der Regel eine Breite von ca. 120 cm aufweisen. Als besonders zweckmäßig insbesondere hinsichtlich des Transports der Vorrichtung hat es sich erwiesen, wenn die Rollmittel lösbar mit dem Verbindungselement verbindbar sind, insbesondere mittels einer Steckbolzenverbindung, so daß die Vorrichtung leicht verlegt werden kann.

Gemäß einer ersten Erfindungsausführung der Vorrichtung kann ein Hubmittel zum Anheben und Aufnehmen der Last vorgesehen sein, das heißt, die Vorrichtung ist derart ausgebildet, daß sie zum selbständigen Anheben/Aufnehmen der Last ausgebildet ist. Die Vorrichtung kann hier beispielsweise nach Art eines Hubwagens ausgebildet sein, wobei die Rollmittel dann relativ lang sind, zweckmäßigerweise länger als das Paket. Als besonders einfache Ausgestaltung des Hubmittels hat sich jedoch ein Hebel erwiesen, der um eine Schwenkachse bewegbar gelagert ist und einen an der Last angreifenden ersten Abschnitt und einen zweiten Handhabungsabschnitt aufweist. Diese Vorrichtungsausgestaltung entspricht im wesentlichen einer Sackkarre, wobei hier der erste Abschnitt zunächst an der Last angelegt wird, wonach der Hebel verschwenkt wird und die Last hierdurch angehoben wird. Bei dieser Ausgestaltung der Vorrichtung sind zum Transport der Last, die in der Regel Abmessungen von 200 cm x 120 cm aufweist, zwei derartige Vorrichtungen erforderlich, die am vorderen und hinteren Ende des Paketes angebracht werden und die jeweiligen Enden anheben, so daß das Paket auf zwei Vorrichtungen ruht, die dann gemeinsam verfahren werden können. Dabei kann erfindungsgemäß der Hebel derart ausgebildet und angeordnet sein, daß der erste Abschnitt in eine derartige Stellung bezüglich der Schwenkachse bringbar ist, daß der Hebel bei aufgenommener Last gegen ein selbständiges Rückschwenken gesperrt ist. Hierdurch wird vermieden, daß der Hebel kontinuierlich gedrückt werden muß, um ein Rückschwenken zu verhindern. Als zweckmäßig hat es sich ferner herausgestellt, wenn am Handhabungsabschnitt wenigstens ein ein Umgreifen während der Hebelbewegung ermöglichender weiterer Abschnitt vorgesehen ist, da der Hebelweg relativ lang ist und mittels des weiteren Abschnitts eine Handhabungsvereinfachung möglich ist. Schließlich hat es sich aus Sicherheitsgründen als zweckmäßig erwiesen, wenn Rastmittel zum Arretieren des Hebels in wenigstens einer Stellung - bevorzugt natürlich der Lastaufnahmestellung - vorgesehen sind. Der Hebel ist zweckmäßigerweise an dem Verbindungselement gelagert, im Hinblick auf einen einfachen Transport vorzugsweise lösbar. Zur Erzielung günstiger Hebeleigenschaften kann das Verbindungselement zumindest im den Hebel tragenden Bereich vertieft ausgebildet sein. Die Schwenkachse liegt dann tiefer, so daß sich günstigere Hebelverhältnisse ergeben, die ein leichteres Anheben ermöglichen. Neben dem manuellen Hebel kann das Hubmittel auch automatisch oder Halbautomatisch ausgebildet sein, z.B. derart, daß es wie bei einem Hubwagen durch eine Pumpbewegung betätogt werden kann.

Wenngleich es möglich ist, die vorbeschriebene Vorrichtung durch Angreifen an der aufgenommenen Last zu verschieben, hat es sich als zweckmäßig erwiesen, ein Mittel zum Bewegen der Vorrichtung vorzusehen, wobei bei dieser Erfindungsausgestaltung der Hebel das Bewegungsmittel sein kann. Selbstverständlich ist auch ein Einsatz motorischer Bewegungsmittel denkbar.

Eine zweite erfindungsgemäße Vorrichtungsausführung sieht vor, daß mindestens zwei Rollmittel an einem gemeinsamen, die Last aufnehmenden Rahmen angeordnet sind. Im Unterschied zur vorbeschriebenen Ausführung in Form des Hubwagens oder der Sackkarre, die eine Lastaufnahme durch den Benutzer selbst ermöglicht, läßt diese Ausgestaltung ein unmittelbares Aufladen der Pakete beispielsweise mittels des die Pakete auf das Dach hebenden Kranes oder dergleichen zukommen, wobei das Paket einfach auf dem Rahmen abgestellt wird. Zweckmäßigerweise sind hierbei vier separate Rollmittel vorgesehen, wobei natürlich auch lediglich zwei - dann entsprechend großflächig ausgebildete Rollmittel - eingesetzt werden können. Auch hier können erfindungsgemäß gegebenenfalls jeweils zwei Rollmittel mittels eines Verbindungselementes miteinander verbunden und mittels des Verbindungselements am Rahmen angeordnet sein, wobei die Rollmittel natürlich auch unmittelbar am Rahmen befestigt sein können. Darüber hinaus kann am Rahmen oder an wenigstens einem Verbindungselement ein Bewegungsmittel in Form einer Zugstange oder dergleichen vorgesehen sein. Um auch hier einen leichten Transport zu ermöglichen, können erfindungsgemäß die Rollmittel lösbar am Rahmen, gegebenenfalls den Verbindungselementen, und/oder gegebenenfalls die Verbindungselemente lösbar am Rahmen befestigt sein, und/oder der Rahmen aus lösbar miteinander verbindbaren Rahmenelementen bestehen und/oder das Bewegungsmittel lösbar angeordnet sein. Dies ermöglicht einen einfachen Transport an die Baustelle, da die Vorrichtung problemlos zerlegt und in einer entsprechenden Transportkiste transportiert werden kann.

Wie bereits beschrieben läßt sich insbesondere bei Verwendung von aus hartem Kunststoff bestehenden Rollelementen eine hinreichende seitliche Verschiebbarkeit realisieren, so daß die Vorrichtung beziehungsweise die gesamte, aus zwei die Last tragenden Vorrichtungen bestehende Konfiguration eine Kurve fahren kann. Als vorteilhaft hat es sich aber erwiesen, wenn erfindungsgemäß die beiden Rollmittel oder gegebenenfalls wenigstens zwei der vier Rollmittel um eine gemeinsame vertikale Achse drehbar sind, das heißt, die Rollmittel können entsprechend verdreht werden, so daß ein direktes Lenken, beispielsweise mittels des Hebels oder dem zusätzlichen Bewegungsmittel möglich ist. Zur Realisation einer Drehverbindung kann der an der Last angreifende erste Abschnitt an einer drehbaren Welle des Hebels um eine zur Drehachse der Welle vertikal stehende Achse drehbar gelagert sein. Die Drehlagerung kann mittels eines am ersten Abschnitts vorspringenden Drehzapfens, der in eine Druchgangsbohrung an der Welle drehbar aufgenommen ist, gebildet sein. Zur Abstützung des ersten Abschnitts, welcher bei aufgenommener Last während des Verdrehens der Rollmittel quasi unbewegt verbleibt, kann an der Welle im wesentlichen endseitig jeweils eine Lagerrolle angeordnet sein, die an der Unterseite des plattenförmigen ersten Abschnitts, diesen gegenlagernd angreift, wobei wenigstens ein Anschlag zur Begrenzung der Drehbewegung der Lagerrollen vorgesehen sein kann. Daneben kann am die Rollmittel verbindenden Verbindungselement eine Drehverbindung vorgesehen sein, die das Hubmittel trägt oder mit dem Rahmen verbunden ist. Dabei kann hier im Falle der Hubwagen- oder Sackkarrenausbildung der Vorrichtung das als Zugstange oder dergleichen ausgebildete Bewegungsmittel vorzugsweise an dem Verbindungselement angeordnet sein, das heißt, es ist nach Art einer Deichsel mit dem drehbeweglichen Teil verbunden. Das Hubmittel kann hier der Hebel sein. Dieser oder aber auch das Bewegungsmittel in Form der Zugstange oder dergleichen kann schließlich in seiner Länge variierbar, insbesondere teleskopierbar sein, was einerseits aus Transportgründen vorteilhaft ist, andererseits auch hinsichtlich der Handhabung, da durch entsprechende Verlängerung des Hebels die effektive Hebellänge verlängert wird und ein erleichtertes Anheben der schweren Last möglich ist.

Weitere Vorteile, Einzelheiten und Merkmale der Erfindung ergeben sich aus dem im folgenden beschriebenen Ausführungsbeispiel sowie anhand der Zeichnungen. Diese zeigen:
- Fig. 1: eine Seitenansicht einer erfindungsgemäßen Vorrichtung einer ersten Ausführungsform, teilweise im Schnitt,
- Fig. 2: eine Stirnansicht der Vorrichtung aus Fig. 1,
- Fig. 3: eine Aufsicht auf die Vorrichtung aus Fig. 1,
- Fig. 4: eine Prinzipskizze zur Darstellung des Einsatzes der beschriebenen Vorrichtung,
- Fig. 5: eine Prinzipskizze einer Vorrichtung einer zweiten Ausführungsform,
- Fig. 6: eine Prinzipskizze einer Vorrichtung gemäß der in Fig. 1 beschriebenen Vorrichtung mit einer Drehbeweglichkeit der Rollmittel,
- Fig. 7: eine Detailansicht einer weiteren Drehverbindung eines Hubmittels, und
- Fig. 8: eine Seitenansicht des Hubmittels.

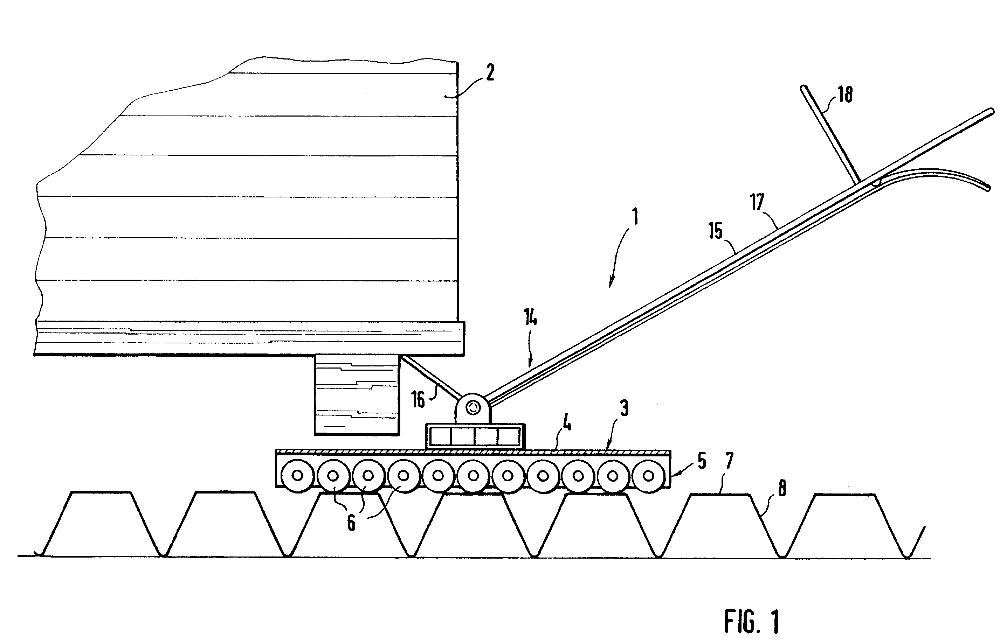

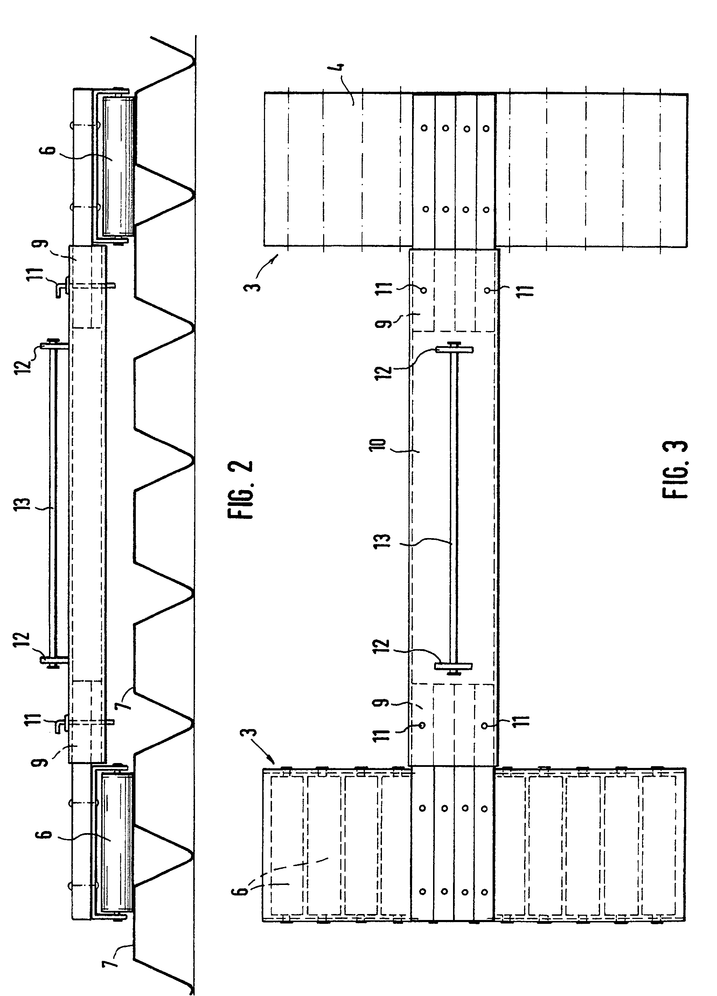

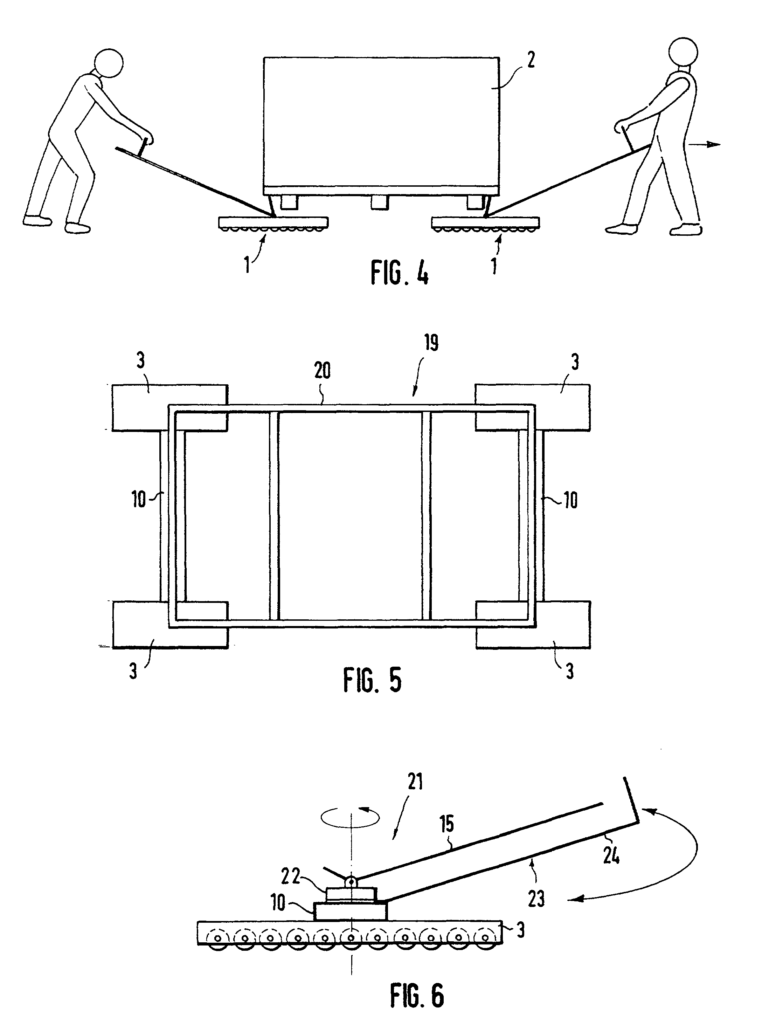

Fig. 1 zeigt in einer Schnittansicht eine erfindungsgemäße Vorrichtung 1, auf die eine Last in Form eines Dämmplattenpaketes 2 aufgenommen ist. Die Vorrichtung 1 besteht aus einem Rollmittel 3, welches mehrere in einem als oberseitig geschlossenes Gehäuse ausgebildeten Trägerrahmen 4 drehbar gelagerte Rollelemente 5 in Form von Rollen oder Walzen 6 aufweist. Im gezeigten Beispiel sind insgesamt elf Rollen 6 vorgesehen. Hierdurch wird ein derart großer Bodenauflagebereich geschaffen, daß das Rollmittel 3 zu jedem Zeitpunkt auf mehreren, im gezeigten Beispiel drei Obergurten 7 der ein zu befahrendes Dach bildenden Trapezbleche 8 aufliegt. Es wird also vermieden, daß ein "hoppelndes" Fahren erfolgt, bedingt durch ein dauerndes Einsacken in die entsprechenden Vertiefungen der Trapezbleche 8. Darüber hinaus wird durch den beachtlich großen Bodenauflagebereich eine optimierte Lastverteilung ermöglicht, da die gesamte Last auf eine relativ große Fläche verteilt wird, insbesondere im Hinblick darauf, daß vgl. Fig. 2 und 3, die Vorrichtung 1 zwei Rollmittel 3 aufweist, also jeweils die doppelte Bodenauflagefläche gegeben ist. Da, vgl. Fig. 4, von dieser Vorrichtung 1 jeweils zwei Vorrichtungen zum Transport des Paketes 2 verwendet werden, entspricht also die gesamte Bodenauflagefläche dem vierfachen der Auflagefläche eines einzelnen Rollmittels 3. Die lokale Blechbelastung kann so deutlich verringert werden, daß die Belastbarkeitsgrenze von ca. 150-200 kg/qm, deren Überschreiten zu einem Verbiegen, schlimmstenfalls einem Brechen des Bleches führen kann, deutlich unterschritten werden kann. Die Rollmittel 3 weisen einen entsprechenden seitlich abstehenden Ansatz 9 auf, an dem ein Verbindungselement 10 in Form eines langgestreckten Trägers lösbar mittels Steckbolzenverbindungen 11 befestigt ist. Über dieses Verbindungselement 10 werden die beiden Rollmittel 3 beabstandet, vorzugsweise derart weit, daß das aufgenommene Paket 2 im Bereich zwischen den Rollmitteln 3 liegt. Da die Breite der Pakete in der Regel 120 cm beträgt, ist eine Länge des Verbindungselementes 10 von ca. 130 cm ausreichend. Die Lösbarkeit ermöglicht es, im Bedarfsfall auch ein kürzeres oder längeres Verbindungselement einzusetzen.

Die Rollen 6 bestehen bevorzugt aus hartem Kunststoff, der kaum an den Obergurten haftet und es ermöglicht, die Vorrichtung bei aufgenommener Last leicht seitlich zu verschieben, so daß auch Kurvenfahrten möglich sind. Der Durchmesser der Rollen beträgt zweckmäßigerweise ca. 8 cm, die Breite ca. 35 cm, wobei die Breite stets derart gewählt sein sollte, daß sie die Breite der Obergurte deutlich übersteigt, so daß ein Befahren parallel zu den Obergurten (vgl. Fig. 2) möglich ist. Die Abmaße können jedoch beliebig variiert werden, wobei dies vor allen von dem Typ des zu befahrenden Trapezbleches abhängig sein wird. Die Anzahl der Rollen 6 kann ebenfalls beliebig variiert werden. Je mehr Rollen vorgesehen sind, das heißt, je länger das jeweilige Rollmittel 3 ist, desto größer ist der Auflagebereich und desto kleiner die lokale Belastung. Eine Rollmittellänge von ca. 100 cm hat sich erfahrungsgemäß als zweckmäßig herausgestellt.

An der Oberseite des Verbindungselements 10 sind Gelenkaufnahmen 12 für eine Schwenklagerung einer Gelenkstange 13 eines Hubmittels 14 in Form eines Hebels 15 vorgesehen. Dieser Hebel 15 weist einen ersten Abschnitt 16 auf, der, vgl. Fig. 1, an dem Paket 2 direkt angreift, sowie einen Handhabungsabschnitt 17, der zum Verschwenken des Hebels 15 dient. Am Abschnitt 17 ist ein weiterer Abschnitt 18 vorgesehen, der zum Umgreifen dient, um eine weitere Handhabung zu ermöglichen, wenn der Hebel 15 weit genug abgesenkt ist. Zum Aufnehmen wird die Vorrichtung 1 mit senkrecht stehendem Hebel an das Paket 2 soweit herangeschoben, bis der erste Abschnitt 16 unterhalb des Paketes liegt. Anschließend wird der Hebel 15 nach unten geschwenkt, so daß der erste Abschnitt 16 am Paket 2 angreift und dieses bei weiterem Verschwenken anhebt. Aus Übersichtlichkeitsgründen ist der komplette Hebel in den Fig. 2 und 3 nicht gezeigt. Das in Fig. 2 gezeigte Verbindungselement 10 ist hier als langgestreckter Träger ausgebildet. Dieser kann jedoch auch derart geformt sein, daß er in dem den Hebel 15 tragenden Bereich abgesenkt ausgebildet ist und näher an die Blechoberfläche gebracht ist, so daß das Paket 2 weniger hoch angehoben werden muß und sich günstigere Hebelverhältnisse ergeben.

Fig. 4 zeigt schließlich den Einsatz der erfindungsgemäßen Vorrichtung 1 zum Transport eines Paketes 2. Ersichtlich arbeitet die Vorrichtung 1 nach dem Prinzip einer Sackkarre, das heißt, das Paket ist an jeweils einem Ende anhebbar. Infolgedessen ist zum Transport der Einsatz zweier Vorrichtungen 1 nötig. Die in Fig. 4 gezeigte Modifikation der Vorrichtung 1 unterscheidet sich insoweit von der in Fig. 1 gezeigten, als der erste Abschnitt derart angeordnet beziehungsweise gelagert ist, daß er in eine solche Stellung bezüglich der Schwenkachse bringbar ist, daß der Hebel 15 bei aufgenommener Last gegen ein selbständiges Rückschwenken gesperrt ist. Das heißt, das Gewicht des Paketes 2 drückt den Hebel herunter, ein Rückschwenken ist hierdurch verhindert. Die aufgenommene Last kann dann mühelos über die unebene Fläche transportiert werden, wie in Fig. 4 angedeutet ist.

Fig. 5 zeigt eine weitere erfindungsgemäße Ausführungsform einer Vorrichtung 19. Im Unterschied zur vorbeschriebenen Vorrichtung 1 kann auf diese Vorrichtung 19 das aufzunehmende Paket unmittelbar beispielsweise mittels des Lastkranes aufgesetzt werden. Zu diesem Zweck ist ein Trägerrahmen 20 vorgesehen, welcher das Paket 2 trägt. Dem Trägerrahmen 20 zugeordnet sind insgesamt vier Rollmittel 3, die wie die vorbeschriebenen Rollmittel ausgebildet sein können, jedoch unterschiedliche Abmessungen aufweisen können. Diese gezeigte Vorrichtung 19 stellt also eine Art Transportwagen dar, bei dem irgendwelche manuellen Aufnahmetätigkeiten nicht erforderlich sind. Selbstverständlich ist es möglich, an der Vorrichtung 19 entsprechende Bewegungsmittel in Form einer Zugstange oder dergleichen vorzusehen, die aus Einfachheitsgründen in Fig. 5 nicht gezeigt sind. Auch hinsichtlich der Anordnung des Rahmens 20 bezüglich der Rollmittel 3 sind unterschiedliche Lösungen denkbar. So ist es möglich, die Rollmittel 3 unmittelbar am Rahmen 20 zu befestigen, gleichermaßen kann die Befestigung auch mittels der Verbindungselemente 10 erfolgen. Auf jeden Fall sollte der Rahmen 20 aus Transportgründen zerlegbar sein. Zu diesem Zweck besteht er aus einzelnen Rahmenelementen, die lösbar miteinander verbindbar sind. Je nach Ausführung sind auch die Rollmittel und gegebenenfalls das Verbindungselement lösbar, so daß die gesamte Vorrichtung zerlegt werden kann.

Schließlich zeigt Fig. 6 eine weitere erfindungsgemäße Vorrichtung 21. Diese entspricht insoweit der in Fig. 1 gezeigten Vorrichtung. Jedoch ist am Verbindungselement 10 eine Drehverbindung 22, beispielsweise ein Drehkranz oder dergleichen, vorgesehen, an dem wiederum der Hebel 15 angeordnet ist. Am Verbindungselement 10 schließlich ist ein Bewegungsmittel 23 in Form einer Zugstange 24 vorgesehen. Diese Modifikation ermöglicht eine Lenkbarkeit der Vorrichtung 21, da mittels der Zugstange 24 die Rollmittel 3 bezüglich des aufgenommenen Pakets verschwenkt werden können und so Kurvenfahrten mit engerem Radius möglich sind. Der Hebel 15 und die Zugstange 24 sind dabei selbstverständlich derart ausgebildet beziehungsweise angeordnet, daß sie einander nicht behindern. Schließlich ist noch darauf hinzuweisen, daß die in Fig. 6 beschriebene Lenkbarkeit selbstverständlich auch bei der Vorrichtung 19 aus Fig. 5 an zumindest einem Verbindungselement 10 realisiert sein kann, gegebenenfalls auch an beiden.

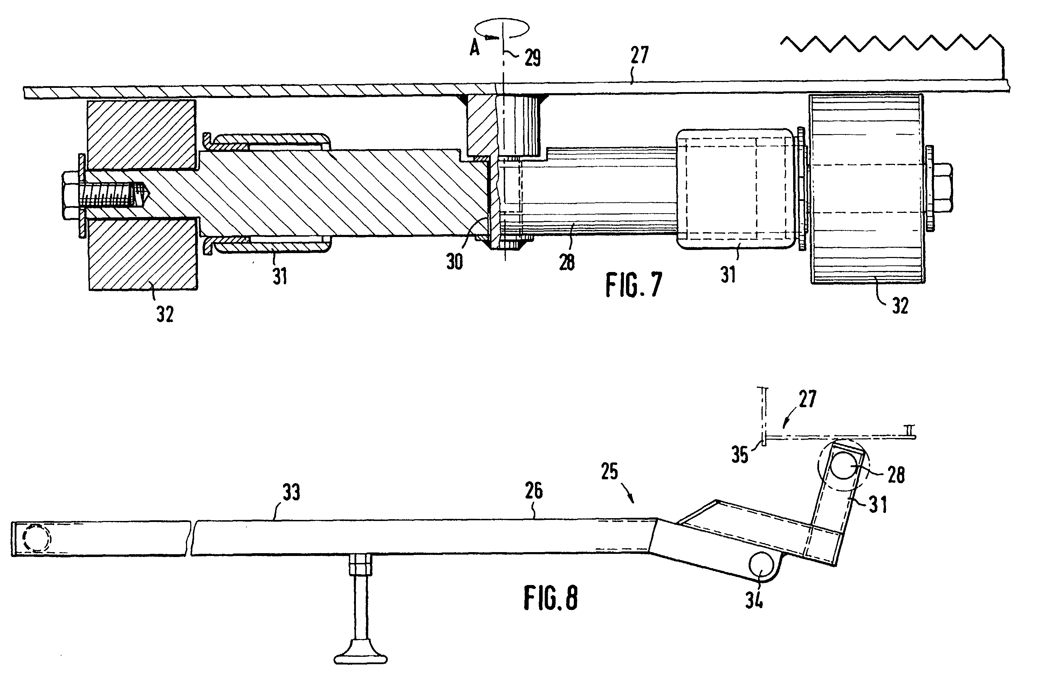

Die Figuren 7 und 8 zeigen eine weitere Ausgestaltung einer Drehverbindung. Am dortigen Hubmittel 25, das ebenfalls als Hebel 26 ausgebildet ist, ist der erste Abschnitt 27 an einer Welle 28 drehbar gelagert. Hierzu greift ein Drehzapfen 29 in eine Durchgangsbohrung 30 an der Welle 28 ein. Die Welle 28 wiederum ist an zwei Hebelstreben 31 drehbar gelagert. An den Enden der Welle 28 sind ferner Lagerrollen 32 vorgesehen, die derart bemessen sind, daß sie an der Unterseite des plattenförmigen Abschnitts 27, diesen gegenlagernd, angreifen. Die Funktionsweise dieser Drehverbindung ist derart, daß nach Anheben der Last durch Herunterdrücken des Handhabungsabschnitts 33 des Hebels 26, welcher mit der Lageraufnahme 34 an dem Verbindungsträger zwischen den beiden hier nicht gezeigten Rollmitteln schwenkgelagert ist, zum Lenken der Hebel 26 um die Drehachse A, gebildet vom Drehzapfen 29 und der Durchgangsbohrung 30, gedreht wird, wobei die Lagerrollen 32 an der Unterseite des ersten Abschnitts 27 abrollen. Der erste Abschnitt 27 verbleibt jeweils in seiner Position, der Hebel wird quasi unter ihm verdreht. Die Verdrehbewegung kann soweit erfolgen, bis eine der Lagerrollen an dem Anschlag 35 am ersten Abschnitt 27 anschlägt. Soll nun die Last abgesetzt werden, wird der Hebel 26 nach oben geschwenkt, was dazu führt, daß der erste Abschnitt 27 samt aufgenommener Last abgesenkt wird, jedoch im wesentlichen auch während der Absenkbewegung in der Horizontalen verbleibt, bedingt durch die Lagerung desselben an der drehbaren Welle 28.

## Patentansprüche

1. Vorrichtung zum Transport schwerer Lasten über eine unebene und belastungsempfindliche Fläche, insbesondere von zu Paketen gepackten Dämmstoffplatten über ein Trapezblechdach, mit mindestens zwei voneinander beabstandeten Rollmitteln (3), von denen jedes mehrere derart hintereinander angeordnete Rollelemente (5) aufweist, daß ein vergrößerter Bodenauflagebereich gebildet ist, so daß das Gewicht der Last zur Erzielung einer geringen Belastung pro Flächeneinheit auf einen entsprechend großen Flächenbereich verteilt wird, **gekennzeichnet durch** ein Hubmittel (14) zum Anheben und Aufnehmen der Last (2).

2. Vorrichtung nach Anspruch 1, **dadurch gekennzeichnet, daß** die Rollelemente (5) als längliche Rollen (6) oder Walzen ausgebildet sind, oder daß jedes Rollelement mehrere nebeneinander angeordnete Rollen, Walzen oder Räder aufweist.

3. Vorrichtung nach Anspruch 1 oder 2, **dadurch gekennzeichnet, daß** das Rollmittel (3) einen Trägerrahmen (4) aufweist, an dem die Rollelemente (5) gehaltert sind.

4. Vorrichtung nach Anspruch 3, **dadurch gekennzeichnet, daß** der Trägerrahmen (4) als an der Unterseite offenes Gehäuse ausgebildet ist.

5. Vorrichtung nach einem der Ansprüche 2 bis 4, **dadurch gekennzeichnet, daß** die Rollenelemente (5) aus Kunststoff, insbesondere aus hartem Kunststoff bestehen.

6. Vorrichtung nach einem der Ansprüche 2 bis 5, **dadurch gekennzeichnet, daß** die Walzen, Rollen (6) oder Räder einen Durchmesser von 5 bis 11 cm, insbesondere von 9 cm aufweisen, und/oder daß die Walzen oder Rollen eine Länge von 20 cm bis 50 cm, insbesondere von 33 cm aufweisen.

7. Vorrichtung nach einem der Ansprüche 2 bis 6, **dadurch gekennzeichnet, daß** jedes Rollmittel (3) 6 bis 16 Rollelemente, insbesondere 10 Rollelemente aufweist.

8. Vorrichtung nach einem der vorangehenden Ansprüche, **dadurch gekennzeichnet, daß** zwei Rollmittel (3) mittels wenigstens einem trägerartigen Verbindungselement (10) beabstandet zueinander verbunden sind.

9. Vorrichtung nach Anspruch 8, **dadurch gekennzeichnet, daß** die Rollmittel (3) derart weit voneinander beabstandet sind, daß sie zumindest teilweise seitlich neben der Last (2) liegen.

10. Vorrichtung nach Anspruch 8 oder 9, **dadurch gekennzeichnet, daß** die Rollmittel (3) lösbar mit dem Verbindungselement (10) verbindbar sind, insbesondere mittels einer Steckbolzenverbindung (11).

11. Vorrichtung nach einem der vorangehenden Ansprüche, **dadurch gekennzeichnet, daß** das Hubmittel (14) als Hebel (15) ausgebildet ist, der um eine Schwenkachse bewegbar gelagert ist und einen an der Last (2) angreifenden ersten Abschnitt (16) und einen zweiten Handhabungsabschnitt (17) aufweist.

12. Vorrichtung nach Anspruch 11, **dadurch gekennzeichnet, daß** der Hebel (15) derart ausgebildet und angeordnet ist, daß der erste Abschnitt (16) in eine derartige Stellung bezüglich der Schwenkachse bringbar ist, daß der Hebel (15) bei aufgenommener Last (2) gegen ein selbständiges Rückschwenken gesperrt ist.

13. Vorrichtung nach Anspruch 11 oder 12, **dadurch gekennzeichnet, daß** am Handhabungsabschnitt (17) wenigstens ein ein Umgreifen während der Hebelbewegung ermöglichender weiterer Abschnitt (18) vorgesehen ist.

14. Vorrichtung nach einem der Ansprüche 11 bis 13, **dadurch gekennzeichnet, daß** Rastmittel zum Arretieren des Hebels in wenigstens einer Stellung vorgesehen sind.

15. Vorrichtung nach einem der Ansprüche 11 bis 14, **dadurch gekennzeichnet, daß** der Hebel (15) an dem Verbindungselement (10) gelagert ist.

16. Vorrichtung nach einem der Ansprüche 11 bis 15, **dadurch gekennzeichnet, daß** der Hebel (15) lösbar insbesondere am Verbindungselement (10) angeordnet ist.

17. Vorrichtung nach Anspruch 15 oder 16, **dadurch gekennzeichnet, daß** das Verbindungselement zumindest im den Hebel tragenden Bereich vertieft ausgebildet ist.

18. Vorrichtung nach einem der vorangehenden Ansprüche, **dadurch gekennzeichnet, daß** ein Mittel (23) zum Bewegen der Vorrichtung vorgesehen ist.

19. Vorrichtung einem der Ansprüche 11 bis 18, **dadurch gekennzeichnet, daß** der Hebel (15) das Bewegungsmittel ist.

20. Vorrichtung nach einem der Ansprüche 1 bis 7, **dadurch gekennzeichnet, daß** die mindestens zwei Rollmittel (3) an einem gemeinsamen, die Last (2) aufnehmenden Rahmen (20) angeordnet sind.

21. Vorrichtung nach Anspruch 20, **dadurch gekennzeichnet, daß** vier separate Rollmittel (3) vorgesehen sind.

22. Vorrichtung nach Anspruch 20 oder 21, **dadurch gekennzeichnet, daß** gegebenenfalls jeweils zwei Rollmittel (3) mittels eines Verbindungselements (10) miteinander verbunden und vorzugsweise mittels des Verbindungselements (10) am Rahmen (20) angeordnet sind.

23. Vorrichtung nach einem der Ansprüche 20 bis 22, **dadurch gekennzeichnet, daß** am Rahmen (20) oder an wenigstens einem Verbindungselement (10) ein Bewegungsmittel in Form einer Zugstange oder dergleichen vorgesehen ist.

24. Vorrichtung nach einem der Ansprüche 20 bis 23, **dadurch gekennzeichnet, daß** die Rollmittel (3) lösbar am Rahmen (20), gegebenenfalls den Verbindungselementen (10), und/oder gegebenenfalls die Verbindungselemente (10) lösbar am Rahmen (20) befestigt sind, und/oder der Rahmen (20) aus lösbar miteinander verbindbaren Rahmenelementen besteht und/oder das Bewegungsmittel lösbar angeordnet ist.

25. Vorrichtung nach einem der vorangehenden Ansprüche, **dadurch gekennzeichnet, daß** die beiden Rollmittel (3) oder gegebenenfalls wenigstens zwei der vier Rollmittel (3) um eine gemeinsame vertikale Achse drehbar sind.

26. Vorrichtung nach Anspruch 25, **dadurch gekennzeichnet, daß** der an der Last angreifende erste Abschnitt (27) an einer drehbaren Welle (28) des Hebels (26) um eine zur Drehachse der Welle (28) vertikal stehende Achse (A) drehbar gelagert ist.

27. Vorrichtung nach Anspruch 26, **dadurch gekennzeichnet, daß** am ersten Abschnitt (27) ein vorspringender Drehzapfen (29) vorgesehen ist, der in einer Durchgangsbohrung (30) an der Welle (28) drehbar aufgenommen ist.

28. Vorrichtung nach Anspruch 26 oder 27, **dadurch gekennzeichnet, daß** an der Welle (28) im wesentlichen endseitig jeweils eine Lagerrolle (32) angeordnet ist, die an der Unterseite des plattenförmigen ersten Abschnitts (27), diesem gegenlagernd, angreift.

29. Vorrichtung nach Anspruch 28, **dadurch gekennzeichnet, daß** an der Unterseite des plattenförmigen ersten Abschnitts (27) wenigstens ein die Drehbewegung begrenzender Anschlag (35) für die Lagerrollen (32) vorgesehen ist.

30. Vorrichtung nach Anspruch 25, **dadurch gekennzeichnet, daß** am die Rollmittel (3) verbindenden Verbindungselement (10) eine Drehverbindung (22) vorgesehen ist, die das Hubmittel trägt oder mit dem Rahmen verbunden ist.

31. Vorrichtung nach Anspruch 30, **dadurch gekennzeichnet, daß** das Bewegungsmittel (23) als Zugstange (24) oder dergleichen ausgebildet und vorzugsweise an dem Verbindungselement (10) angeordnet ist, und das Hubmittel (14) der Hebel (15) ist.

32. Vorrichtung nach einem der vorangehenden Ansprüche, **dadurch gekennzeichnet, daß** der Hebel oder das Bewegungsmittel in Form der Zugstange oder dergleichen in seiner Länge variierbar, insbesondere teleskopierbar ist.

## Claims

1. Device for conveying heavy loads over an uneven and load-sensitive surface, in particular packages of panels of insulating material over a roof having trapezoid corrugations, having two rolling means (3) spaced apart, each of which has rolling elements (5) arranged consecutively in such a manner that an enlarged base support region is formed, so that the weight of the load is divided to achieve low stress per unit area over a correspondingly large area, **characterised by** a lifting means (14) for lifting and receiving the load (2).

2. Device according to claim 1, **characterised in that** the rolling elements (5) are formed as elongate rolls (6) or rollers, or that each rolling element has adjacently disposed rolls, rollers or wheels.

3. Device according to claim 1 or 2, **characterised in that** the rolling means (3) has a carrying frame (4) on which the rolling elements (5) are mounted.

4. Device according to claim 3, **characterised in that** the carrying frame (4) is formed as a housing open on the underside.

5. Device according to one of claims 2 to 4, **characterised in that** the roll elements (5) consist of plastics material, in particular of hard plastics material.

6. Device according to one of claims 2 to 5, **characterised in that** the rollers, rolls (6) or wheels have a diameter of 5 to 11 cm, in particular of 9 cm, and/or the rollers or rolls have a length of 20 cm to 50 cm, in particular 33 cm.

7. Device according to one of claims 2 to 6, **characterised in that** each rolling means (3) has 6 to 16, in particular 10 rolling elements.

8. Device according to one of the preceding claims, **characterised in that** two rolling means (3) are connected together, spaced apart, by means of at least one girder-like connecting element (10).

9. Device according to claim 8, **characterised in that** the rolling means (3) are so spaced apart that they lie at least in part laterally next to the load (2).

10. Device according to claim 8 or 9, **characterised in that** the rolling means (3) are connectable detachably to the connecting element (10), in particular by means of a socket pin connection (11).

11. Device according to one of the preceding claims, **characterised in that** the lifting means (14) is formed as a lever (15), which is movably mounted about a pivotal axis and has a first section (16) acting on the load (2) and a second handling section (17).

12. Device according to claim 11, **characterised in that** the lever (15) is so formed and arranged that the first section (16) can be brought into such a position with regard to the pivotal axis that the lever (15) is locked against automatic pivoting back once the load (2) has been received.

13. Device according to claim 11 or 12, **characterised in that** the handling section (17) is provided with at least one further section (18) to permit grasping during the lever movement.

14. Device according to one of claims 11 to 13, **characterised in that** catch means are provided for locking the lever in at least one position.

15. Device according to one of claims 11 to 14, **characterised in that** the lever (15) is mounted on the connecting element (10).

16. Device according to one of claims 11 to 15, **characterised in that** the lever (15) is disposed detachably in particular on the connecting element (10).

17. Device according to claim 15 or 16, **characterised in that** the connecting element is formed recessed at least in the region carrying the lever.

18. Device according to one of the preceding claims, **characterised in that** a means (23) is provided for moving the device.

19. Device according to one of claims 11 to 18, **characterised in that** the lever (15) is the moving means.

20. Device according to one of claims 1 to 7, **characterised in that** the rolling means (3) of which there are at least two are disposed on a common frame (20) which takes the load (2).

21. Device according to claim 20, **characterised in that** four separate rolling means (3) are provided.

22. Device according to claim 20 or 21, **characterised in that** optionally every two rolling means (3) are connected together by means of a connecting element (10) and are disposed on the frame (20) preferably by means of the connecting element (10).

23. Device according to one of claims 20 to 22, **characterised in that** moving means in the form of a drawbar or the like is provided on the frame (20) or on at least one connecting element (10).

24. Device according to one of claims 20 to 23, **characterised in that** the rolling means (3) are fixed detachably to the frame (20), optionally the connecting elements (10), and/or optionally the connecting elements (10) are fixed detachably to the frame (20), and/or the frame (20) consists of frame elements which are detachably connectable together, and/or the moving means is detachably arranged.

25. Device according to one of the preceding claims, **characterised in that** the two rolling means (3) or optionally at least two of the four rolling means (3) are rotatable about a common vertical axis.

26. Device according to claim 25, **characterised in that** the first section (27) acting on the load is rotatably mounted on a rotary shaft (28) of the lever (26) about an axis positioned vertical to the axis of rotation of the shaft (28).

27. Device according to claim 26, **characterised in that** on the first section (27) a projecting rotary pin (29) is provided, which is held rotatably on the shaft (28) in a through-bore (30).

28. Device according to claim 26 or 27, **characterised in that** at least one bearing roll (32), which acts on the underside of the plate-shaped first section (27), bearing against the same, is disposed substantially on the end of the shaft (28).

29. Device according to claim 28, **characterised in that** on the underside of the plate-shaped first section (27) at least one stop limiting the rotary motion is provided for the bearing rolls (32).

30. Device according to claim 25, **characterised in that** a rotary connection (22) is provided on the connecting element (10) connecting the rolling means (3) and carries the lifting means or is connected to the frame.

31. Device according to claim 30, **characterised in that** the moving means (23) is formed as a drawbar (24) or the like and is preferably disposed on the connecting element (10), and the lifting means (14) is the lever (15).

32. Device according to one of the preceding claims, **characterised in that** the lever or the moving means in the form of the drawbar or the like has a variable length, is in particular telescopic.

## Revendications

1. Dispositif pour le transport de charges lourdes sur une surface inégale et sensible à des contraintes de charge, notamment de plaques d'isolant emballées en paquets sur un toit en tôles à ondes trapézoïdales, comportant au moins deux moyens de roulement (3) placés à une certaine distance l'un de l'autre, dont chacun comprend plusieurs éléments de roulement (5) disposés en file, de telle manière qu'une zone d'appui au sol agrandie soit formée, afin que le poids de la charge soit réparti sur une zone d'étendue correspondante de la surface, pour permettre de parvenir à une faible charge appliquée par unité de surface, **caractérisé par** un moyen de levage (14) destiné à soulever et accueillir la charge (2).

2. Dispositif selon la revendication 1, **caractérisé en ce que** les éléments de roulement (5) sont conçus sous forme de rouleaux (6) ou galets de grande longueur, ou **en ce que** chaque élément de roulement comprend plusieurs rouleaux, galets ou roues, disposés côte à côte.

3. Dispositif selon la revendication 1 ou 2, **caractérisé en ce que** le moyen de roulement (3) comprend un châssis porteur (4), auquel les éléments de roulement (5) sont fixés.

4. Dispositif selon la revendication 3, **caractérisé en ce que** le châssis porteur (4) est conçu sous forme d'un carter ouvert au niveau de la face inférieure.

5. Dispositif selon l'une des revendications 2 à 4, **caractérisé en ce que** les éléments de roulement (5) sont réalisés en matière plastique, en particulier en une matière plastique dure.

6. Dispositif selon l'une des revendications 2 à 5, **caractérisé en ce que** les galets, rouleaux (6) ou roues présentent un diamètre de 5 à 11 cm, en particulier de 9 cm, et/ou **en ce que** les galets ou rouleaux présentent une longueur de 20 cm à 50 cm, en particulier de 33 cm.

7. Dispositif selon l'une des revendications 2 à 6, **caractérisé en ce que** chaque moyen de roulement (3) comprend de 6 à 16 éléments de roulement, en particulier 10 éléments de roulement.

8. Dispositif selon l'une des revendications précédentes, **caractérisé en ce que** deux moyens de roulement (3) sont reliés, en étant maintenus à distance l'un de l'autre, au moyen d'au moins un élément de jonction (10) semblable à une poutre.

9. Dispositif selon la revendication 8, **caractérisé en ce que** les moyens de roulement (3) sont à une distance telle l'un de l'autre, qu'ils se placent, au moins pour partie, sur le côté de la charge (2), près de celle-ci.

10. Dispositif selon la revendication 8 ou 9, **caractérisé en ce que** les moyens de roulement (3) peuvent être reliés de façon amovible à l'élément de jonction (10), notamment au moyen d'un système d'assemblage par goupilles enfichables (11).

11. Dispositif selon l'une des revendications précédentes, **caractérisé en ce que** le moyen de levage (14) est conçu sous forme d'un levier (15), qui est monté déplaçable autour d'un axe de pivotement et qui présente un premier tronçon (16) agissant sur la charge (2) et un deuxième tronçon de manipulation (17).

12. Dispositif selon la revendication 11, **caractérisé en ce que** le levier (15) est conçu et disposé de telle manière que le premier tronçon (16) puisse être amené dans une position telle, par rapport à l'axe de pivotement, que le levier (15), lorsque la charge (2) est accueillie dessus, soit bloqué vis-à-vis d'un pivotement spontané vers l'arrière.

13. Dispositif selon la revendication 11 ou 12, **caractérisé en ce que** sur le tronçon de manipulation (14), il est prévu au moins un tronçon supplémentaire (18) permettant, pendant le déplacement du levier, une prise enveloppante.

14. Dispositif selon l'une des revendications 11 à 13, **caractérisé en ce que** des moyens d'encliquetage sont prévus pour immobiliser le levier dans au moins une position.

15. Dispositif selon l'une des revendications 11 à 14, **caractérisé en ce que** le levier (15) est tourillonné sur l'élément de jonction (10).

16. Dispositif selon l'une des revendications 11 à 15, **caractérisé en ce que** le levier (15) est monté amovible, en particulier sur l'élément de jonction (10).

17. Dispositif selon la revendication 15 ou 16, **caractérisé en ce que** l'élément de jonction est conçu sous une forme évidée, au moins dans la région portant le levier.

18. Dispositif selon l'une des revendications précédentes, **caractérisé en ce qu'**un moyen (23) est prévu pour le déplacement du dispositif.

19. Dispositif selon l'une des revendications 11 à 18, **caractérisé en ce que** le levier (15) est le moyen de déplacement.

20. Dispositif selon l'une des revendications 1 à 7, **caractérisé en ce que** les deux, au moins, moyens de roulement (3) sont disposés sur un châssis commun (20) accueillant la charge (2).

21. Dispositif selon la revendication 20, **caractérisé en ce que** quatre moyens de roulement distincts (3) sont prévus.

22. Dispositif selon la revendication 20 ou 21, **caractérisé en ce que**, le cas échéant, deux moyens de roulement (3) sont reliés l'un à l'autre par l'intermédiaire d'un élément de jonction respectif (10) et, de préférence, sont mis en place sur le châssis (20) au moyen de l'élément de jonction (10).

23. Dispositif selon l'une des revendications 20 à 22, **caractérisé en ce que** sur le châssis (20) ou sur au moins un élément de jonction (10), il est prévu un moyen de déplacement sous forme d'une barre de traction ou analogue.

24. Dispositif selon l'une des revendications 20 à 23, **caractérisé en ce que** les moyens de roulement (3) sont fixés, de façon amovible, au châssis (20), le cas échéant aux éléments de jonction (10), et/ou le cas échéant les éléments de jonction (10) sont fixés, de façon amovible, au châssis (20), et/ou le châssis (20) est constitué d'éléments de châssis pouvant être reliés entre eux de façon amovible et/ou le moyen de déplacement est monté amovible.

25. Dispositif selon l'une des revendications précédentes, **caractérisé en ce que** les deux moyens de roulement (3) ou, le cas échéant, au moins deux des quatre moyens de roulement (3) peuvent tourner autour d'un axe vertical commun.

26. Dispositif selon la revendication 25, **caractérisé en ce que** le premier tronçon (27), qui agit sur la charge, est monté à rotation sur un arbre tournant (28) du levier (26), autour d'un axe (A) se tenant verticalement par rapport à l'axe de rotation de l'arbre (28).

27. Dispositif selon la revendication 26, **caractérisé en ce que** sur le premier tronçon (27), il est prévu un pivot saillant (29), qui est reçu à rotation libre dans un perçage traversant (30) de l'arbre (28).

28. Dispositif selon la revendication 26 ou 27, **caractérisé en ce que** sur l'arbre (28), est disposé, sensiblement à chaque extrémité, un galet d'appui (32), qui s'applique contre la face inférieure du premier tronçon (27) en forme de plaque, en constituant un contre-appui pour ce dernier.

29. Dispositif selon la revendication 28, **caractérisé en ce que** sur la face inférieure du premier tronçon (27) en forme de plaque, il est prévu au moins une butée (35) limitant le mouvement de rotation, pour les galets d'appui (32).

30. Dispositif selon la revendication 25, **caractérisé en ce que** sur l'élément de jonction (10) reliant les moyens de roulement (3), il est prévu une liaison tournante (22), qui porte le moyen de levage ou est reliée au châssis.

31. Dispositif selon la revendication 30, **caractérisé en ce que** le moyen de déplacement (23) est conçu sous forme d'une barre de traction (24) ou analogue et, de préférence, est disposé sur l'élément de jonction (10), et le moyen de levage (14) est le levier (15).

32. Dispositif selon l'une des revendications précédentes, **caractérisé en ce que** le levier ou le moyen de déplacement sous forme de la tige de traction ou analogue, est d'une longueur modifiable, notamment de façon télescopique.
